(19) Europäisches Patentamt
European Patent Office
Office européen des brevets

(11) **EP 2 085 138 A1**

(12) **EUROPÄISCHE PATENTANMELDUNG**

(43) Veröffentlichungstag:
**05.08.2009 Patentblatt 2009/32**

(21) Anmeldenummer: **09001140.4**

(22) Anmeldetag: **28.01.2009**

(51) Int Cl.:
*B01J 20/22* (2006.01)     *B01J 20/26* (2006.01)
*B01D 17/02* (2006.01)     *C02F 1/68* (2006.01)
*C08L 1/02* (2006.01)     *C09K 3/32* (2006.01)

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK TR**
Benannte Erstreckungsstaaten:
**AL BA RS**

(30) Priorität: **04.02.2008   DE 102008007475**

(71) Anmelder: **Kalle GmbH
65203 Wiesbaden (DE)**

(72) Erfinder:
• **Mans, Leo, Dr.
55120 Mainz (DE)**
• **Theis, Hans-Jürgen
55122 Mainz (DE)**

(74) Vertreter: **Plate, Jürgen et al
Plate Schweitzer Zounek
Patentanwälte
Rheingaustrasse 196
65203 Wiesbaden (DE)**

(54) **Bindemittel zur Aufnahme von Flüssigkeiten, insbesondere Öl**

(57)     Die Erfindung betrifft ein Bindemittel aus oder mit Flocken aus cellulosischem Schwammtuchmaterial zur Aufnahme von flüssigen Chemikalien. Das Bindemittel weist ein hohes Aufnahmevermögen auf, u.a. für petrochemische Produkte, wie Mineralöl, Benzin und Dieselkraftstoff.

**EP 2 085 138 A1**

**Beschreibung**

Die Erfindung betrifft ein Bindemittel zur Aufnahme von Flüssigkeiten, insbesondere von flüssigen Chemikalien.

Der Einsatz von absorbierenden Materialien zur Aufnahme von unbeabsichtigt freigesetzten (z.B. durch Unfälle) flüssigen Chemikalien und petrochemischen Produkten, wie Mineralöl, Benzin, Diesel und dergl., hat unverändert große Bedeutung, die mit dem globalen Frachtverkehr stetig zunimmt.

Es handelt sich dabei um feste Stoffe, die geeignet sind, Schadstoffe, die vorwiegend in flüssiger Form vorliegen, so aufzunehmen, dass damit Gefahren im Sinne des Arbeits- und Umweltschutzes, hinsichtlich der Verschleppung in Wasser oder Böden und damit zu Menschen, Tieren, Pflanzen oder schützenswerten Gütern gemindert werden. Zudem ermöglichen sie die effektive Handhabung und den Transport der Schadstoffe in fester Form. Absorbierende Materialien, im Folgenden als Bindemittel bezeichnet, sind aus dem Stand der Technik bekannt.

So ist in der DE 2 229 361 ein Granulat aus hydrophobem PUR-Hartschaum, das ölige Bestandteile schwammartig aufsaugt, offenbart.

In der AT 204 967 ist ein Verfahren zur Bindung von Erdöl, Erdölderivaten und Pflanzenölen auf Wasseroberflächen mittels Polymeren in Form von Fibriden, Fasern oder Vliesen, beschrieben.

Gegenstand der DE 101 04 259 ist ein ölabsorbierendes Bindemittel mit Polypropylen als Basismaterial und 0,5 Gew.-% Popcorn, wobei Polypropylen und Popcorn als Granulat vorliegen.

In der DE 41 27 823 ist ein Adsorbens zur Beseitigung gasförmiger und flüssiger chemischer Schadstoffe, wie Öl, Benzin oder anderen Kohlenwasserstoffen, offenbart, das aus mechanisch zerkleinerten und zu einem Flauschstoff aufbereiteten Zigarettenfiltern und/oder deren festen Ausgangs- und/oder Zwischenprodukten hergestellt ist. Das Adsorbens wird mit einem Bindemittel gebunden und zu einem saugfähigen Formkörper, insbesondere zu Flocken, Granulat, Körnern oder Pulver verarbeitet.

Die DE 44 17 503 betrifft ein Faserstoffmaterial, das bei der Papierherstellung anfällt und als Saugmittel für Öle, Lacke und Farben verwendet werden kann.

In der DE 10 2006 021 525 ist ein Schwamm offenbart, der an seiner Außenfläche mit einem Wirkstoff beaufschlagt ist oder aus einem Wirkstoff besteht, der im Wasser schwebende Schadstoffe aufnimmt und chemisch und/oder physikalisch bindet. Bei dem Wirkstoff handelt es sich um einen anorganischen Schaum wie z.B. Schaumglas und/oder Koks und/oder aufgeschäumtes Aluminium.

In der DE 198 49 427 ist ein Verfahren zur Entfernung ölartiger Verschmutzungen auf festen Flächen und auf Wasseroberflächen beschrieben, bei dem Lederfasern aus Recyclingmaterial in Form von Presslingen zur Einsatzstelle transportiert und dort aufgefasert und auf der ölverschmutzten Fläche verteilt und in vollgesogenem Zustand entfernt werden.

Gemäß der DE 199 54 643 wird ein Ölbindemittel aus faserbildenden Proteinen und Mikroorganismen eingesetzt, wobei die faserbildenden Proteine in Granulatform umgewandelt und mittels chemischer Verbindungen hydrophobiert worden sind.

In der DE 202 08 950 U1 ist ein Ölbindestoff aus nachwachsenden Rohstoffen offenbart, der aus zerkleinertem Laub-/Blattabfall durch ein Agglomerationsverfahren, wie Zusammenpressen, Extrudieren und/oder Pelletieren erzeugt wird. In einer Ausgestaltung enthält der Ölbindestoff als Binder bzw. Klebemittel Methyl-oder Carboxymethylcellulose, die die Pellets in Form hält.

In der DE 297 05 010 U1 ist ein Bindemittel für Öle und flüssige Chemikalien, petrochemische Produkte, Pflanzenöle, organische Lösungsmittel, Lacke, Farben und andere flüssige Chemikalien offenbart, wobei das Bindemittel aus einer Mischung aus Gummimehl und zerkleinerten Kunststoffschäumen sowie gegebenenfalls weiteren saugfähigen pulver- oder faserförmigen Materialien besteht, die durch einen Klebstoff zu schwimmfähigem Granulat, Pellets oder Formteilen vebunden sind. In einer Ausgestaltung enthält das Bindemittel als Mischungsbestandteile Papier, Pappe oder Textilvlies.

In der DE 10 2004 024 134 ist eine absorbierende Textilstruktur aus einem Verbundstoff mit umhülltem Saugkern beschrieben, die eine hohe Absorptionsleistung für Öle, Emulsionen, Chemikalien sowie andere Wasser- und Bodenschadstoffe aufweist und insbesondere als Saugmatte oder für Putztücher verwendet wird. Hierbei besteht der Saugkern aus Mono- oder Bikomponenten-Filamenten, vorzugsweise aus Polypropylen oder Polyethylen.

Gegenstand der EP 0 649 895 ist eine Saugmatte zur Aufnahme öliger und wässriger Flüssigkeiten, die einen von einer flüssigkeitsdurchlässigen Umhüllung umgebenen Kern aus einem saug- und speicherfähigen Werkstoff enthält. Der Kern besteht aus einem textilen Faser-Vliesstoff aus etwa 70 bis 80 % Polypropylen und 30 bis 20 % Viskose.

Die Wirkung von Bindemitteln beruht in der Regel auf Sorption, also der Anreicherung von Stoffen an den Grenzflächen fester und gas- bzw. dampfförmiger Stoffe oder an den Grenzflächen fester und flüssiger Stoffe. Bei der Absorption wird der Stoff im Volumen eines Bindemittels (das dann Sorbens genannt wird) intensiv aufgenommen, dies ist im allgemeinen mit einer Volumenvergrößerung des sorbierenden Mediums verbunden.

Das Absorptionsvermögen eines Bindemittels ist durch die Größe der äußeren und inneren Oberfläche, sowie durch die Absorptionskraft für den jeweiligen Schadstoff bestimmt. So wird z.B. für die Aufnahme von Öl Polypropylen als Granulat oder in Kissenform eingesetzt. Aber auch Silikate und Polyurethane werden je nach Anwendungsgebiet als Pulver oder Granulat verwendet. Die Bindemittel für Öl werden je nach Anwendungsgebiet in die Klassen I bis IV eingeteilt (Richtlinie LTwS-Nr. 27 "Anforderungen an Ölbinder", herausgegebenen vom deutschen Umweltbundesamt). Bindemittel der Klasse I und IV sind besonders geeignet für den Einsatz auf Gewässern, während jene der Klasse II im allgemeinen auf Land, aber auch auf kleineren Gewässern (z.B. Bächen) und jene der Klasse III bei Schadensfällen im industriellen und gewerblichen Bereich eingesetzt werden.

Zur Vermeidung von Staubbelästigungen des Einsatzpersonals sowie Verlusten durch Windverwehung, die zu einem erschwerten Bergen des mit Öl aufgesogenen Bindemittels führen, wurde der Feinkornanteil (Körnung kleiner 0,125 mm) von Bindemitteln für Öl auf kleiner 10 % festgelegt, wodurch die äußere Oberfläche begrenzt wird.

Bevor für ein Bindemittel eine Zulassung erteilt wird, muss seine arbeitsmedizinische Unbedenklichkeit und Umweltverträglichkeit nachgewiesen werden. Zudem müssen Bindemittel folgende Anforderungen erfüllen:

- Mindesthaltbarkeit (Lagerstabilität),
- unter gewöhnlichen Lagerbedingungen keine Freisetzung von leicht brennbaren oder entzündlichen Substanzen,
- frei von gesundheitsschädigenden Bestandteilen,
- keine Beeinträchtigung der physikalischen, chemischen und biologischen Beschaffenheit des Wassers und des Bodens und
- frei von Klumpen und Fremdkörpern.

Bindemittel für unpolare organische Flüssigkeiten, die auf Wasser aufschwimmen, werden ebenfalls als Öl-Bindemittel bezeichnet und gemäß der bereits eingangs erwähnten Richtlinie LTwS-Nr. 27 den vier Klassen bzw. Typen zugeordnet, wobei die Menge bzw. das Volumen des Bindemittels auf das Volumen der aufzunehmenden Flüssigkeit bezogen ist.

| Öl-Bindemittel | Einsatzgebiet | Bedarf an Ölbindemittel (bezogen auf Flüssigkeit) |
|---|---|---|
| Typ I | Ölbinder mit besonderer Eignung für den Einsatz auf allen Gewässern, aber auch für Gewerbe und Industrie. An diesen Typ werden besonders hohe Anforderungen hinsichtlich Schwimmfähigkeit und Ölbindevermögen gestellt. | max. 350 Vol.-% |
| Typ II | Ölbinder für den kurzzeitigen Einsatz auf kleineren Gewässern sowie auf festem Land, auch für Gewerbe und Industrie. An die Schwimmfähigkeit und das Ölbindevermögen werden geringere Anforderungen gestellt als bei Typ I. | max. 600 Vol.-% |
| Typ III | Ölbinder für besonderen Bedarf auf festem Untergrund und Verkehrsflächen, ebenfalls für Gewerbe und Industrie geeignet. Dieser Bindertyp muss nicht wasserabweisend oder schwimmfähig sein. | max. 350 Vol.-% |

(fortgesetzt)

| Öl-Bindemittel | Einsatzgebiet | **Bedarf an Ölbindemittel** (bezogen auf Flüssigkeit) |
|---|---|---|
| Typ IV a) trocken b) wassergesättigt | Ölbinder mit besonderer Form für den Einsatz auf Gewässern, die nach Gebrauch eine vollständige Bergung erleichtert oder für vorbeugende Maßnahmen besonders geeignet ist. Ölbinder dieses Typs bestehen aus Materialien, deren Leistungsdaten (Ölbindevermögen) denen des Typs I entsprechen. | a) max. 350 Vol.-% b) max. 385 Vol.-% |

Bindemittel, die für den Einsatz auf Verkehrsflächen bestimmt sind, müssen ein definiertes Griffigkeitsmaß haben, das mit einem SRT-Gerät (Portable Skid Resistance Tester) bestimmt wird.

Das Aufnahmevermögen der meisten Granulate, die z.B. als Öl-Bindemittel vom Typ III eingesetzt werden, liegt bei weniger als 100 % ihres Eigengewichts. Um das Aufnahmevermögen eines solchen Granulats zu erhöhen, müsste die äußere Oberfläche, d.h. die Feinheit des Granulats, erhöht werden. Die hiermit einhergehende vermehrte Staubbildung und Beeinträchtigung für Mensch und Umwelt schließt diese Maßnahme jedoch aus. Alternativ wurde versucht, das Aufnahmevermögen durch Flächengebilde, wie Fasern aus Baumrinden, Platten aus Granulat oder Matten aus Braunkohlengranulat mit Baumwollgewebe, zu erhöhen. Diese Versuche führten jedoch nicht zum gewünschten Erfolg. Lediglich mit Rollen-, Schlauchkissen- und Vliesformen aus Polypropylen gelang es, die Ölaufnahmefähigkeit auf bis zu 6,5 l pro kg Bindemittel zu erhöhen. Derartige Bindemittel aus Polypropylen können allerdings nur durch Verbrennung entsorgt werden. Ein weiterer Nachteil besteht darin, daß verwehtes Bindemittel aus Polypropylen nicht verrottet und dementsprechend die Umwelt langfristig belastet.

Aufgabe der Erfindung war es deshalb, ein Material bereitzustellen, das ein hohes Aufnahmevermögen für lipophile Flüssigkeiten (z.B. Öl), für flüssige Chemikalien, wie Alkohole, Lösungsmittel oder Laugen, sowie für hydrophile Flüssigkeiten, wie wasserbasierte Emulsionen, Dispersionen und dergleichen aufweist und in der Natur verrottet, ohne die Umwelt zu belasten.

Diese Aufgabe wird gelöst durch ein Bindemittel zur Aufnahme von Flüssigkeiten, das dadurch gekennzeichnet ist, daß es Flocken aus cellulosischem Schwammtuchmaterial umfaßt. Vorzugsweise besteht das Bindemittel zu mehr als 50 Gew.-% aus den Flocken, besonders bevorzugt zu mehr als 90 Gew.-%, speziell zu 100 Gew.-%.

Die Flocken in dem erfindungsgemäßen Bindemittel weisen ein Aufnahme- und Bindevermögen für Flüssigkeiten von größer 100 Gew.-%, bevorzugt von größer 200 Gew.-% und besonders bevorzugt von größer 400 Gew.-%, bezogen auf sein Eigengewicht, auf.

Insbesondere eignet sich das Bindemittel zur Aufnahme von organischen Kohlenwasserstoffen, mineralischen und synthetischen Ölen, Hydrauliköl, Bremsflüssigkeit, Dieselkraftstoff, RME-Biodiesel (RME=Rapsölmethylester), Benzin, Ethanol, Methanol, Ethylenglykol, Triethanolamin, Natronlauge, Chlorbleichlauge, Ammoniak, Harnstofflösung oder Dispersionsfarbe.

Die Flocken des Bindemittels haben einen mittleren Durchmesservon mindestens 0,5 bis 10 mm, bevorzugt von 0,5 bis 4 mm, wobei 90 % der Flocken einen äquivalenten Durchmesservon größer 0,125 mm aufweisen. Hierbei entspricht der äquivalente Durchmesser einer Flocke dem Durchmesser einer Kugel, die das gleiche Volumen wie die Flocke einnimmt.

Die nachfolgende Tabelle zeigt eine bevorzugte Größenverteilung:

| Größenverteilung der Schwammtuch-Flocken in Gew.% | |
|---|---|
| > 4,0 mm | 8,3 Gew.-% |
| 4,0 - 0,5 mm | 86,8 Gew.-% |
| 0,5 - 0,125 mm | 3,7 Gew.-% |
| < 0,125 mm | 1,2 Gew.-% |

Das cellulosische Schwammtuchmaterial, das in dem erfindungsgemäßen Bindemittel in Form von Flocken vorliegt, hat in trockenem Zustand eine Dichte im Bereich von 0,04 bis 0,15 $g/cm^3$, bevorzugt von 0,05 bis 0,09 $g/cm^3$

und besonders bevorzugt von 0,06 bis 0,07 g/cm$^3$.

Wenn das erfindungsgemäße Bindemittel neben den Flocken aus dem (gegebenenfalls vorbefeuchteten) cellulosischen Schwammtuchmaterial noch weitere Bestandteile (die in der Regel ebenfalls als Bindemittel wirken) enthält, dann sollte deren Größe, Form und Dichte nicht zu stark abweichen, um ein Entmischen zu vermeiden. Die weiteren Bestandteile sind bevorzugt ebenfalls organischer Natur, damit das Bindemittel nach der Aufnahme der Flüssigkeit in einer Müllverbrennungsanlage vollständig verbrennt. Sie sollten außerdem biologisch abbaubar und frei von unerwünschten Elementen, wie Chlor oder Schwefel, sein. Beispiele für weitere Bestandteile sind die in der Einleitung genannten Faser-Vliesstoffe aus Polypropylen und Viskose, Polyurethanschaum-Flocken, Torf- oder Baumrindestücke.

In einer vorteilhaften Ausgestaltung der Erfindung enthält das cellulosische Schwammtuchmaterial des Bindemittels ein Verstärkungsmaterial, z.B. in Form von Fasern oder eines Netzes. Insbesondere handelt es sich bei dem Verstärkungsmaterial um Baumwolle, Viskose, Hanf, Flachs, Jute und/oder Kunststoff, wie PET, PA, PE oder PP.

Der Durchmesser der Poren des cellulosischen Schwammtuchmaterials beträgt maximal 1,5 mm, bevorzugt 0,1 bis 1,2 mm, besonders bevorzugt 0,3 bis 1,0 mm. Zudem weist das cellulosische Schwammtuchmaterial eine spezifische innere Oberfläche auf, für die sich ein nomineller Wert im Bereich von 500 bis 4500 cm$^2$/g, bevorzugt von 700 bis 2000 cm$^2$/g, bestimmen läßt (der nominelle Wert läßt sich z.B. anhand der Korngrößenverteilung des verwendeten Porenbildners ermitteln).

In einer Weiterbildung der Erfindung sind mehr als 10 Gew.-%, bevorzugt mehr als 30 Gew.-%, besonders bevorzugt 50 bis 100 Gew.-% der (trockenen) Flocken mit einem Befeuchtungsmittel imprägniert. Insbesondere wird Wasser oder eine wässrige Lösung eines hygroskopischen Salzes wie MgCl2 als Befeuchtungsmittel verwendet. Bevorzugt beträgt die Menge an Befeuchtungsmittel 20 bis 150 Gew.-%, bevorzugt 50 bis 120 Gew.-%, bezogen auf das Trockengewicht des cellulosischen Schwammtuchmaterials.

In einer weiteren Ausführungsform der Erfindung ist das Bindemittel mit einer oberflächenaktiven Substanz mit einem HLB-Wert (hydrophilic-lipophilic-balance) im Bereich von 1 bis 5, bevorzugt von 2 bis 4, imprägniert.

Eine weitere Aufgabe der Erfindung besteht darin, ein Verfahren zur Herstellung des erfindungsgemäßen Bindemittels bereitzustellen.

Diese Aufgabe wird gelöst durch ein Verfahren, das die folgenden drei Schritte umfasst:

(a) Erzeugen eines Formkörpers aus cellulosischem Schwammtuchmaterial nach einem Viskose-oderAminoxid-Verfahren, wobei eine cellulosische Rohmasse, die eine Celluloselösung, einen Porenbildner und gegebenenfalls Additive und Verstärkungsmaterial enthält, geformt und regeneriert wird;
(b) optionales Nachbehandeln des Formkörpers; und
(c) mechanisches Zerkleinern des Formkörpers zu Flocken.

Cellulosisches Schwammtuchmaterial ist seit langem bekannt; es wird allgemein nach dem sogenannten Viskoseverfahren hergestellt. Dabei wird zunächst Zellstoff, insbesondere Holzzellstoff, mit Natriumhydroxid und Schwefelkohlenstoff in eine alkalische Cellulosexanthogenatlösung, die sogenannte Viskoselösung, übergeführt. Gegebenenfalls werden der gereiften Viskoselösung Baumwollkämmlinge, beigemengt. Das geschieht im allgemeinen mit Hilfe eines Kneters. Anstelle der Baumwollkämmlinge bzw. -fasern können als Verstärkungsmaterialien auch Viskosefasern dienen. Anschließend wird ein Porenbildner, insbesondere ein wasserlösliches anorganisches Salz mit einem Schmelzpunkt unterhalb der Temperatur des Koagulationsbades, besonders bevorzugt Glaubersalz (= Natriumsulfat-Decahydrat), hinzugefügt und gleichmäßig vermischt. Gegebenenfalls kann die Masse durch Zugabe von Farbpigmenten oder Farbstoffen eingefärbt werden. Diese Schwammtuch-Rohmasse wird dann auf einen Träger, beispielsweise ein gelochtes Endlosband, in der gewünschten Schichtdicke aufgetragen. Die Regenerierung, d.h. die Wiederausfällung, der Cellulose erfolgt dann im allgemeinen in einem erwärmten, alkalischen Koagulationsbad. Sie kann auch in einem sauren Medium, beispielsweise verdünnter Schwefelsäure, durchgeführt werden. Bei der Wiederausfällung der Cellulose wird die innere Verstärkung in das Schwammtuchmaterial eingebunden.

Glaubersalz hat einen sehr niedrigen Schmelzpunkt. Daher wird es in dem Koagulationsbad, das typischerweise eine Temperatur von 90 bis 103°C aufweist, aufgeschmolzen und herausgelöst. Anstelle der Salzkristalle bleiben Poren und Hohlräume entsprechender Größe zurück. Schließlich wird das Schwammtuch ausgewaschen, um es von Salzresten und anhaftenden Reaktionsprodukten zu befreien. Nach dem Trocknen wird es in schmale Bahnen geschnitten, die aufgerollt werden. Die Rollenware kann dann mechanisch zu Flocken der gewünschten Größe gehäckselt werden.

Anstelle eines nach dem Viskoseverfahren hergestellten cellulosischen Schwammtuches auf Basis von regenerierter Cellulose kann als Ausgangsmaterial auch ein nach dem Aminoxid-Verfahren hergestelltes Schwammtuch auf Basis von gefällter Cellulose dienen. Dabei wird die Cellulose in wäßrigem Aminoxid, vorzugsweise in N-Methyl-morpholin-N-oxid (NMMO)-Monohydrat, gelöst. Die Cellulose wird dabei rein physikalisch gelöst, sie liegt nicht in derivatisierter Form vor wie beim Viskoseverfahren. Die NMMO/Cellulose kann ebenso mit Porenbildnern und Verstärkungsmaterialien, insbesondere Baumwoll-Kämmlingen, vermischt und zu einer Schicht geformt werden, die dann ein Fällbad durchläuft (das allgemein eine verdünnte wäßrige NMMO-Lösung enthält). Wegen des höheren Schmelzpunkts wird hierbei als Porenbildner wasserfreies Natriumsulfat anstelle von Natriumsulfat-Decahydrat bevorzugt.

Bekannt sind auch Schwammtücher, die aus modifizierter Cellulose und natürlichen und/oder synthetischen Fasern hergestellt werden, wobei die Cellulose in dekristallisierter Form vorliegt und ihre Hydroxylgruppen mit Acetylgruppen modifiziert sind. Der Durchschnittssubstitutionsgrad beträgt 0,2 bis 1,5. Als Lösungsmittel wird bei der Herstellung der Schwammtücher Dimethylsulfoxid oder ein Gemisch von Dimethylsulfoxid und Lithiumchlorid, N-Methyl-morpholin-N-oxid oder ein Gemisch von Dimethylacetamid und Lithiumchlorid eingesetzt. Diese Schwammtuchmaterialien sind aufgrund des speziellen Cellulosematerials (Celluloseacetat) vergleichsweise teuer in der Herstellung.

In einer vorteilhaften Ausführungsform des Verfahrens werden der cellulosischen Rohmasse oberflächenaktive Substanzen mit einem HLB-Wert (hydrophilic-lipophilic-balance) im Bereich von 1 bis 5, bevorzugt von 2 bis 4, zugesetzt.

Gegebenenfalls wird das cellulosische Schwammtuchmaterial im Schritt (b) mit Wasser und/oder mit oberflächenaktiven Substanzen mit einem HLB-Wert (hydrophilic-lipophilic-balance) im Bereich von 1 bis 5, bevorzugt von 2 bis 4 imprägniert. Dazu geeignet sind beispielsweise quartäre Ammoniumsalze mit 8 bis 20 Kohlenstoffatome in jeder Alkylkette, beispielsweise Didecyl-dimethylammoniumchlorid (Bardac®), oder quartäre Ammoniumsalze mit nur einer Alkylkette und einer Benzylgruppe, wie Cocosalkyl-dimethyl-benzylammoniumchlorid (Barquat® CB 50).

Beispiele

Das Aufnahmevermögen des erfindungsgemäßen Bindemittels aus Schwammtuchmaterial (nachfolgend auch mit STK bezeichnet) wurde für verschiedene Flüssigkeiten ermittelt. Für einige der Flüssigkeiten wurden zudem Vergleichsmessungen mit bekannten Bindemitteln durchgeführt.

Die Versuchsproben des erfindungsgemäßen Bindemittels bestanden aus Flocken aus trockenem Schwammtuchmaterial (STK 6T), aus befeuchtetem Schwammtuchmaterial (STK 6W) oder aus einer Mischung aus trockenem und befeuchtetem Schwammtuchmaterial (STK 6TW), wobei der befeuchtete Anteil einen Feuchtigkeitsgehalt von 100 bis 150 Gew.-% (Gewicht des vom Bindemittel absorbierten Wassers, bezogen auf das Trockengewicht des Bindemittels) aufwies.

Sowohl das trockene wie auch das befeuchtete Schwammtuchmaterial weisen ein Aufnahmevermögen für die untersuchten Flüssigkeiten der Gruppen B, F, H und P auf, das über den in den Richtlinien LTwS-Nr. 31 bzw. LTwS-Nr. 27 geforderten Werten liegt (LTwS-Nr. 31 "Anforderungen an Chemikalienbindemittel"; LTwS-Nr. 27 "Anforderungen an Ölbinder"; jeweils herausgegebenen vom Umweltbundesamt).

Bei Vergleichsmessungen an dem erfindungsgemäßen und kommerziell erhältlichen Bindemitteln zeigte das erfindungsgemäße, aus trockenem Schwammtuchmaterial (STK 6T) bestehende Bindemittel für Motor- und Hydrauliköl sowie Dieselkraftstoff (Gruppe H) ein 5 bis 8-fach höheres Aufnahmevermögen als die bisher verwendeten, kommerziell erhältlichen Produkte. Für diese Substanzen konnte das Aufnahmevermögen des erfindungsgemäßen Bindemittels durch Befeuchten mit Wasser noch erhöht werden. Überraschenderweise hat das erfindungsgemäße Bindemittel für Motoröl auch ein höheres Aufnahmevermögen als hydrophobe Materialien, wie Polypropylenvlies. Das hervorragende Aufnahmevermögen beruht im wesentlichen auf der Porenstruktur des Schwammtuchmaterials und kann für hydrophobe Flüssigkeiten wie Motoröl durch Imprägnieren mit Emulgatoren noch erhöht werden.

Aufnahmevermögen für Altöl und Dieselkraftstoff (Gruppe H)

Untersuchte Bindemittel:

| J | Produktbezeichnung<br>Typ y-III R für Öle auf Böden; Pr.-Nr.22QQQ 4736 05;<br>Öl-Jaeger Vertriebs GmbH, Lippstadt |
|---|---|
| MA | All Purpose Floor Absorbent III R; Multi Sorb - Top Quality -;<br>Mostert Absorbants B.V. Holland |
| STK 6T | geschreddertes, trockenes Schwammtuchmaterial; Kalle GmbH, Wiesbaden |

Das Aufnahmevermögen eines Bindemittels für Altöl und Dieselkraftstoff wird in Anlehnung an DIN 53 923 bestimmt. Hierzu wird die Menge an Altöl/Dieselkraftstoff ermittelt, die ein Bindemittel unter definierten Bedingungen aufnimmt, wenn es darin gelagert wird. Dieses Aufnahmevermögen wird in zwei Maßeinheiten angegeben; zum einen in [Gew.-%], zum anderen in Liter Altöl/Dieselkraftstoff je kg Bindemittel [l/kg], jeweils bezogen auf das Trockengewicht des Bindemittels. Die durchschnittliche Dichte von Altöl beträgt 0,873 kg/l, die von Dieselkraftstoff 0,833 kg/l.

Verwendete Geräte und Instrumente:

- Rundsieb aus Plastik mit Maschenweite 1,5 mm und einem Durchmesser von 140 mm oder mehr
- Schale mit Wasser zum Einlegen des mit Bindemittel gefüllten Rundsiebes
- Schale mit Altöl/Dieselkraftstoff zum Einlegen des mit Bindemittel gefüllten Rundsiebes
- Oberschalenwaage
- Fotoschale zum Wiegen des befeuchteten Bindemittels
- Stoppuhr
- Scheidetrichter
- Becherglas

Messmethode:

- leeres Rundsieb in Fotoschale auf Oberschalenwaage tarieren
- trockenes Bindemittel in Rundsieb einwiegen = trockene Einwaage
- Rundsieb mit Bindemittel in mit Wasser gefüllte Schale legen, wobei der Wasserspiegel mindestens 20 mm über dem Bindemittel steht
- nach einer Einwirkzeit von 60±3 Sekunden Rundsieb mit Bindemittel aus dem Wasser entnehmen und für 120±3 Sekunden zum Abtropfen abstellen
- Rundsieb mit befeuchtetem Bindemittel in der tarierten Fotoschale wiegen = feuchte Einwaage
- Rundsieb mit befeuchtetem Bindemittel in die mit Altöl/Dieselkraftstoff gefüllte Schale legen, wobei der Altöl-/Dieselkraftstoffspiegel mindestens 20 mm über dem Bindemittel steht
- nach einer Einwirkzeit von 60±3 Sekunden Rundsieb mit dem Bindemittel aus dem Altöl/Dieselkraftstoff entnehmen für 120±3 Sekunden zum Abtropfen abstellen
- Rundsieb mit dem Bindemittel in der tarierten Fotoschale wiegen = Auswaage
- Inhalt der mit Altöl/Dieselkraftstoff gefüllten Schale in Scheidetrichter geben, bis zur Phasentrennung warten und Wasser in tariertes Becherglas abgiessen und wiegen = Wasserabgabe

Auswertung:

$$\text{Aufnahme-}\atop\text{vermögen [\%]} = \frac{\text{Auswaage [g] - feuchte Einwaage [g] + Wasserabgabe [g]}}{\text{trockene Einwaage [g]}} \times 100$$

$$\text{Aufnahmever-}\atop\text{mögen [l/kg]} = \frac{\text{Auswaage [g] - feuchte Einwaage [g] + Wasserabgabe [g]}}{\text{trockene Einwaage [g] x Altöl-/Dieselkraftstoffdichte [g/cm}^3\text{]}}$$

Messergebnisse für Altöl:

| Bindemittel | trockene Einwaage [g] | feuchte Einwaage [g] | Auswaage [g] | Wasserabgabe [g] | Aufnahmevermögen [%] | Aufnahmevermögen [l/kg] |
|---|---|---|---|---|---|---|
| J | 10 | 15,9 | 17,7 | 4,9 | 67 | 0,77 |
| MA | 10 | 21,0 | 22,2 | 4,1 | 53 | 0,61 |
| STK 6T | 10 | 181,2 | 190,6 | 47,1 | 565 | 6,47 |

Messergebnisse für Dieselkraftstoff:

| Bindemittel | trockene Einwaage [g] | feuchte Einwaage [g] | Auswaage [g] | Wasserabgabe [g] | Aufnahmevermögen [%] | Aufnahmevermögen [l/kg] |
|---|---|---|---|---|---|---|
| J | 10 | 14,3 | 14,7 | 1,5 | 19 | 0,23 |
| MA | 10 | 18,2 | 19,5 | 0 | 13 | 0,16 |
| STK 6T | 10 | 202,9 | 191,2 | 28,4 | 167 | 1,91 |

Aufnahmevermögen und Lagerstabilität für Chemikalien der Gruppen B, F, H, P

Untersuchte Bindemittel:

|  | Produktbezeichnung |
|---|---|
| STK 6T | geschreddertes, trockenes Schwammtuchmaterial; Kalle GmbH, Wiesbaden |
| STK 6TW | wie vor, jedoch 50 % trocken und 50 % befeuchtet |
| STK 6W | wie vor, jedoch 100 % befeuchtet |

Das Aufnahmevermögen eines Bindemittels für Chemikalien wird in Anlehnung an DIN 53 923 bestimmt. Hierzu wird die Menge der Chemikalie ermittelt, die das Bindemittel bei Lagerung in der Chemikalie unter definierten Bedingungen aufnimmt. Das Aufnahmevermögen für Chemikalien wird in zwei Maßeinheiten angegeben; zum Einen in [Gew.-%] und zum Anderen als Masseverhältnis von gebundener Chemikalie zu Bindemittel [kg/kg], jeweils bezogen auf das Trockengewicht des Bindemittels.

Um die Lagerstabilität zu ermitteln, wird das Bindemittel über eine Zeitspanne von 24 h in der Chemikalie ohne Rühren gelagert, wobei der Flüssigkeitsspiegel mindestens 15 mm über der Füllhöhe des Bindemittels steht. Nach Ablauf von 24 h wird das Bindemittel visuell auf Veränderungen untersucht. Sofern keine Veränderungen erkennbar sind, wird die Lagerstabilität als "positiv" bewertet.

Verwendete Geräte und Instrumente:

- Rundsieb aus Plastik mit Maschenweite 1,5 mm und einem Durchmesser von größer gleich 140 mm
- Schale mit Chemikalie zum Einlegen des mit Bindemittel gefüllten Rundsiebes
- Oberschalenwaage
- Fotoschale zum Wiegen des Bindemittels
- Stoppuhr
- Becherglas

Messmethode:

- trockenes Bindemittel wiegen = Einwaage
- Rundsieb mit Bindemittel in die mit der Chemikalie gefüllte Schale legen, wobei der Flüssigkeitsspiegel der Chemikalie mindestens 20 mm überdem Bindemittel steht
- nach einer Einwirkzeit von 60 ± 3 Sekunden Rundsieb mit Bindemittel aus der Chemikalie entnehmen und für 120 ± 3 Sekunden zum Abtropfen abstellen
- mit der Chemikalie gesättigtes Bindemittel wiegen = Auswaage

Auswertung:

$$\text{Aufnahmevermögen [\%]} = \frac{\text{Auswaage [g] - Einwaage [g]}}{\text{Einwaage [g]}} \times 100$$

$$\text{Aufnahmevermögen [kg/kg]} = \frac{\text{Auswaage [g] - Einwaage [g]}}{\text{Einwaage [g]}}$$

Messergebnisse für Chemikalien der Gruppe B (basische Substanzen):

| Chemikalie | Bindemittel | Einwaage [g] | Auswaage [g] | Aufnahmevermögen [%] | Aufnahmevermögen [kg/kg] | Lagerstabilität 24 h |
|---|---|---|---|---|---|---|
| Natronlauge (33 %) | STK 6T | 10 | 199,3 | 1893 | 18,93 | positiv |
| | STK 6TW | 10 | 163,4 | 1534 | 15,34 | positiv |
| Wäßrige Ammoniaklösung (25 %) | STK 6T | 10 | 198 | 1880 | 18,80 | positiv |
| | STK 6TW | 10 | 158,7 | 1487 | 14,87 | positiv |
| Triethanolamin (85 %) | STK 6T | 10 | 99,5 | 895 | 8,95 | positiv |
| | STK 6TW | 10 | 119,1 | 1091 | 10,91 | positiv |
| Chlorbleichlauge* | STK 6T | 10 | 210,8 | 2008 | 20,08 | positiv |
| | STK 6TW | 10 | 178,8 | 1688 | 16,88 | positiv |
| *15 % aktives Chlor; Dan Chlorix Natriumhydrochlorit 28 % | | | | | | |

Messergebnisse für Chemikalien der Gruppe F (feuergefährliche brennbare Flüssigkeiten):

| Chemikalie | Bindemittel | Einwaage [g] | Auswaage [g] | Aufnahmevermögen [%] | Aufnahmevermögen [kg/kg] | Lagerstabilität 24 h |
|---|---|---|---|---|---|---|
| Normalbenzin DIN EN 228 (bleifrei) | STK 6T | 10 | 32,8 | 228 | 2,28 | positiv |
| | STK 6TW | 10 | 47,6 | 376 | 3,76 | positiv |
| Tetrahydrofuran | STK 6T | 10 | 47,9 | 379 | 3,79 | positiv |
| | STK 6TW | 10 | 65,1 | 551 | 5,51 | positiv |
| Toluol | STK 6T | 10 | 45,4 | 354 | 3,54 | positiv |
| | STK 6TW | 10 | 59,6 | 496 | 4,96 | positiv |
| Ethanol | STK 6T | 10 | 39,1 | 291 | 2,91 | positiv |
| | STK6TW | 10 | 57,1 | 471 | 4,71 | positiv |
| Universalverdünnung[2] | STK 6T | 10 | 41,3 | 313 | 3,13 | positiv |
| | STK 6TW | 10 | 58,4 | 484 | 4,84 | positiv |
| Spiritus[3] | STK 6T | 10 | 44,4 | 344 | 3,44 | positiv |
| | STK 6TW | 10 | 62,4 | 524 | 5,24 | positiv |
| [2]Kluthe Lösin 100 Universal-Verdünnung; enthält Xylol (Isomerenmischung) [3]Kluthe Brennspiritus; Ethylalkohol denaturiert | | | | | | |

Messergebnisse für Chemikalien der Gruppe H (unpolare organische Flüssigkeiten):

| Chemikalie | Bindemittel | Einwaage [g] | Auswaage [g] | Aufnahmevermögen [%] | Aufnahmevermögen [kg/kg] | Lagerstabilität 24 h |
|---|---|---|---|---|---|---|
| Motoröl 15W-40 | STK 6T | 10 | 72,3 | 623 | 6,23 | positiv |
| | STK 6TW | 10 | 94,9 | 849 | 8,49 | positiv |
| | STK 6W | 10 | 109,1 | 991 | 9,91 | positiv |
| Hydrauliköl HLP 46 | STK 6T | 10 | 69,6 | 596 | 5,96 | positiv |
| | STK 6TW | 10 | 75,7 | 657 | 6,57 | positiv |
| | STK 6W | 10 | 109,3 | 993 | 9,93 | positiv |

(fortgesetzt)

| Chemikalie | Bindemittel | Einwaage | Auswaage | Aufnahmevermögen | | Lagerstabilität |
|---|---|---|---|---|---|---|
| | | [g] | [g] | [%] | [kg/kg] | 24 h |
| Dieselkraftstoff DIN EN 590 | STK 6T | 10 | 57,8 | 478 | 4,78 | positiv |
| | STK 6TW | 10 | 77,6 | 676 | 6,76 | positiv |
| | STK 6W | 10 | 93,7 | 837 | 8,37 | positiv |
| RME - Biodiesel DIN EN 14214 | STK 6TW | 10 | 79,0 | 690 | 6,9 | positiv |
| Normalbenzin DIN EN 226 (bleifrei) | STK 6T | 10 | 36,3 | 263 | 2,63 | positiv |
| | STK 6TW | 10 | 51,1 | 411 | 4,11 | positiv |
| | STK 6W | 10 | 73,8 | 638 | 6,38 | positiv |
| Gemisch[4] | STK 6T | 10 | 54,3 | 443 | 4,43 | positiv |
| | STK 6TW | 10 | 77,1 | 671 | 6,71 | positiv |
| | STK 6W | 10 | 88,3 | 783 | 7,83 | positiv |
| [4]Mischung aus 20 % Motoröl, 20 % Benzin, 20 % Diesel, 20 % Hydrauliköl, 20 % Kühlerfrostschutz | | | | | | |

Messergebnisse für Chemikalien der Gruppe P (wässrige und polare Flüssigkeiten):

| Chemikalie | Bindemittel | Einwaage | Auswaage | Aufnahmevermögen | | Lagerstabilität |
|---|---|---|---|---|---|---|
| | | [g] | [g] | [%] | [kg/kg] | 24 h |
| Monoethyle nglykol | STK 6T | 10 | 83,6 | 736 | 7,36 | positiv |
| | STK 6TW | 10 | 112,3 | 1023 | 10,23 | positiv |
| Dispersionsfarbe[5] | STK 6T | 10 | 169,4 | 1594 | 15,94 | positiv |
| | STK 6TW | 10 | 196,3 | 1863 | 18,63 | positiv |
| 1 % wässrige Harnstofflösung | STK 6T | 10 | 169,6 | 1596 | 15,96 | positiv |
| | STK 6TW | 10 | 134,1 | 1241 | 12,41 | positiv |
| [5]Inhaltsstoffe: Kunststoffdispersion, Titandioxid, Kalkspat, Silikate, Wasser, Additive, Konservierungsstoffe | | | | | | |

**Patentansprüche**

1.  Bindemittel zur Aufnahme von Flüssigkeiten, **dadurch gekennzeichnet, daß** es Flocken aus cellulosischem Schwammtuchmaterial umfaßt.

2.  Bindemittel nach Anspruch 1, **dadurch gekennzeichnet, dass** die Flocken ein Aufnahme- und Bindevermögen für Flüssigkeiten von größer 100 Gew.-%, bevorzugt von größer 200 Gew.-% und besonders bevorzugt von größer 400 Gew.-%, bezogen auf ihr Eigengewicht, aufweisen, wobei die Flüssigkeiten vorzugsweise aus den folgenden Gruppen stammen: organische Kohlenwasserstoffe, mineralische und synthetische Öle, Hydrauliköl, Bremsflüssigkeit, Dieselkraftstoff, RME-Biodiesel (RME=Rapsölmethylester), Benzin, Alkohole, Ethylenglykol, Triethanolamin, Natronlauge, Chlorbleichlauge, Ammoniak, Harnstofflösung und Dispersionsfarbe.

3.  Bindemittel nach Anspruch 1, **dadurch gekennzeichnet, dass** etwa 8 Gew.-% der Flocken einen mittleren äquivalenten Durchmesser von mehr als 4 mm, etwa 87 Gew.-% einen mittleren äquivalenten Durchmesser von 0,5 bis 4 mm, etwa 4 Gew.-% einen mittleren äquivalenten Durchmesser von 0,125 bis 05 mm, und weniger als etwa 1 Gew.-% der Flocken einen mittleren äquivalenten Durchmesser von weniger als 0,125 mm aufweisen.

4.  Bindemittel nach Anspruch 1, **dadurch gekennzeichnet, dass** das cellulosische Schwammtuchmaterial in trockenem Zustand eine Dichte im Bereich von 0,04 bis 0,15 g/cm$^3$, bevorzugt von 0,05 bis 0,10 g/cm$^3$ und besonders bevorzugt von 0,06 bis 0,07 g/cm$^3$ aufweist.

5. Bindemittel nach Anspruch 1, **dadurch gekennzeichnet, dass** das cellulosische Schwammtuchmaterial ein Verstärkungsmaterial, bevorzugt in Form von Fasern oder eines Netzes enthält, wobei das Verstärkungsmaterial bevorzugt aus Baumwolle, Viskose, Hanf, Flachs, Jute und/oder Kunststoff, insbesondere PET, PA, PE, PP besteht.

6. Bindemittel nach Anspruch 1, **dadurch gekennzeichnet, dass** das cellulosische Schwammtuchmaterial Poren mit einem Durchmesser von bis zu 1,5 mm, bevorzugt von 0,1 bis 1,2 mm und besonders bevorzugt von 0,3 bis 1,0 mm aufweist und eine spezifische innere Oberfläche im Bereich von 500 bis 4500 cm$^2$/g, bevorzugt von 700 bis 2000 cm$^2$/g, aufweist.

7. Bindemittel nach Anspruch 1, **dadurch gekennzeichnet, dass** mehr als 10 Gew.-%, bevorzugt mehr als 30 Gew.-% und besonders bevorzugt 50 bis 100 Gew.-% der Flocken miteinem Befeuchtungsmittel befeuchtet sind, wobei die Flocken bevorzugt befeuchtet sind mit Wasser oder einer wässrigen Lösung eines hygroskopischen Salzes, bevorzugt einer wässrigen$MgCl_2$-Lösung.

8. Bindemittel nach Anspruch 7, **dadurch gekennzeichnet, dass** die Menge an Befeuchtungsmittel 20 bis 150 Gew.-%, bevorzugt 50 bis 120 Gew.-%, bezogen auf das Trockengewicht des cellulosischen Schwammtuchmaterials, beträgt.

9. Bindemittel nach Anspruch 1, **dadurch gekennzeichnet, dass** die Flocken imprägniert sind mit einer oberflächenaktiven Substanz mit einem HLB-Wert im Bereich von 1 bis 5, bevorzugt von 2 bis 4.

10. Bindemittel nach Anspruch 1, **dadurch gekennzeichnet, daß** es zu mehr als 50 Gew.-%, bevorzugt zu mehr als 90 Gew.-%, besonders bevorzugt zu 100 Gew.-%, aus Flocken aus cellulosischem Schwammtuchmaterial besteht.

11. Verfahren zur Herstellung eines Bindemittels gemäß Anspruch 1, umfassend die Schritte:

(a) Erzeugung eines Formkörpers aus cellulosischem Schwammtuchmaterial nach einem Viskose- oderAminoxid-Verfahren, wobei eine cellulosische Rohmasse, die eine Celluloselösung, einen Porenbildner und gegebenenfalls Additive und Verstärkungsmaterial enthält, geformt und regeneriert wird;
(b) optionale Nachbehandlung des Formkörpers und
(c) mechanische Zerkleinerung des Formkörpers zu Flocken.

12. Verfahren nach Anspruch 11, **dadurch gekennzeichnet, dass** die cellulosische Rohmasse im Schritt (a) auf ein gelochtes Trägerband aufgetragen und zu einer Schicht geformt wird.

13. Verfahren nach Anspruch 11, **dadurch gekennzeichnet, dass** als Porenbildner ein wasserlösliches anorganisches Salz mit einem Schmelzpunkt unterhalb der Temperatur des Koagulationsbads verwendet wird.

14. Verfahren nach Anspruch 11, **dadurch gekennzeichnet, dass** die cellulosische Rohmasse oberflächenaktive Substanzen mit einem HLB-Wert im Bereich von 1 bis 5, bevorzugt von 2 bis 4, enthält, bevorzugt quartäre Dialkyl-dimethyl-oder Alkyl-benzyl-dimethyl- ammoniumsalze mit 8 bis 20 Kohlenstoffatomen in jeder Alkylkette.

15. Verfahren nach Anspruch 11, **dadurch gekennzeichnet, dass** der Formkörper im Schritt (b) imprägniert wird mit Wasser und/oder mit oberflächenaktiven Substanzen mit einem HLB-Wert im Bereich von 1 bis 5, bevorzugt von 2 bis 4.

Europäisches
Patentamt
European
Patent Office
Office européen
des brevets

**EUROPÄISCHER RECHERCHENBERICHT**

Nummer der Anmeldung

EP 09 00 1140

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 591 524 A (ERIKSEN KNUT EMIL) 6. Juli 1971 (1971-07-06) | 1-10 | INV. B01J20/22 |
| Y | * Spalte 1, Zeile 23 * <br> * Spalte 2, Zeile 4 - Zeile 9 * <br> * Spalte 2, Zeile 27 - Zeile 31 * <br> * Spalte 3, Zeile 9 - Zeile 14 * <br> * Spalte 3, Zeile 15 - Zeile 24 * <br> * Spalte 3, Zeile 25 - Zeile 70 * <br> * Anspruch 12 * <br> ----- | 11-15 | B01J20/26 B01D17/02 C02F1/68 C08L1/02 C09K3/32 |
| X | US 4 537 877 A (ERICSSON THOMAS [SE]) 27. August 1985 (1985-08-27) <br> * Spalte 1, Zeile 59 - Spalte 2, Zeile 2 * <br> * Spalte 2, Zeile 45 - Zeile 47 * <br> * Spalte 2, Zeile 55 - Zeile 57 * <br> * Spalte 3, Zeile 15 - Zeile 22 * <br> * Anspruch 1 * <br> ----- | 1-10 | |
| X | WO 2005/090699 A (KALLE GMBH [DE]; MANS LEO [DE]; NEY PAUL EDWARD [DE]) 29. September 2005 (2005-09-29) <br> * Seite 7, Zeile 9 - Zeile 17 * <br> * Seite 10, Zeile 2 - Zeile 4 * <br> * Seite 3, Zeile 6 - Seite 4, Zeile 32 * <br> ----- | 1-10 | **RECHERCHIERTE SACHGEBIETE (IPC)** B01J B01D C02F C08L C09K |
| Y | WO 99/27835 A (KALLE NALO GMBH & CO KG [DE]; MANS LEO [DE]; HAMMER KLAUS DIETER [DE]) 10. Juni 1999 (1999-06-10) <br> * Seite 7, Zeile 20 - Zeile 32 * <br> * Seite 8, Zeile 7 - Zeile 9 * <br> * Seite 7, Zeile 15 - Zeile 17 * <br> * Seite 5, Zeile 26 - Zeile 27 * <br> * Seite 1, Zeile 4 - Zeile 6 * <br> ----- | 11-15 | |
| P,X | DE 20 2008 001546 U1 (KALLE GMBH [DE]) 27. März 2008 (2008-03-27) <br> * das ganze Dokument * <br> ----- | 1-15 | |

-/--

Der vorliegende Recherchenbericht wurde für alle Patentansprüche erstellt

| Recherchenort | Abschlußdatum der Recherche | Prüfer |
|---|---|---|
| Den Haag | 15. Juni 2009 | Kaluza, Nicoleta |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    .................................................................
& : Mitglied der gleichen Patentfamilie, übereinstimmendes
    Dokument

EPO FORM 1503 03.82 (P04C03)

**EP 2 085 138 A1**

| | Europäisches Patentamt European Patent Office Office européen des brevets | **EUROPÄISCHER RECHERCHENBERICHT** | **Nummer der Anmeldung** EP 09 00 1140 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| P,Y | DE 10 2007 003336 A1 (FREUDENBERG CARL KG [DE]) 24. Juli 2008 (2008-07-24) * das ganze Dokument * ----- | 11-15 | |
| A | US 4 605 640 A (FANTA GEORGE F [US] ET AL) 12. August 1986 (1986-08-12) * das ganze Dokument * ----- | 1-15 | |

| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 15. Juni 2009 | Kaluza, Nicoleta |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..........................................................................
& : Mitglied der gleichen Patentfamilie, übereinstimmendes Dokument

EPO FORM 1503 03.82 (P04C03)

15

**ANHANG ZUM EUROPÄISCHEN RECHERCHENBERICHT**
**ÜBER DIE EUROPÄISCHE PATENTANMELDUNG NR.**          EP 09 00 1140

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2009

| Im Recherchenbericht angeführtes Patentdokument | Datum der Veröffentlichung | Mitglied(er) der Patentfamilie | Datum der Veröffentlichung |
|---|---|---|---|
| US 3591524 A | 06-07-1971 | DE 1811023 A1 | 19-06-1969 |
| | | DK 127921 B | 04-02-1974 |
| | | GB 1221476 A | 03-02-1971 |
| | | NL 6817041 A | 02-06-1969 |
| | | NO 118786 B | 09-02-1970 |
| | | SE 306981 B | 16-12-1968 |
| US 4537877 A | 27-08-1985 | AU 1436583 A | 17-11-1983 |
| | | BR 8302400 A | 10-01-1984 |
| | | CA 1208621 A1 | 29-07-1986 |
| | | EP 0094363 A1 | 16-11-1983 |
| | | JP 58210979 A | 08-12-1983 |
| | | SE 8202932 A | 11-11-1983 |
| WO 2005090699 A | 29-09-2005 | DE 102004011287 A1 | 22-09-2005 |
| | | EP 1725716 A1 | 29-11-2006 |
| WO 9927835 A | 10-06-1999 | AT 213602 T | 15-03-2002 |
| | | BR 9815153 A | 10-10-2000 |
| | | CN 1280471 A | 17-01-2001 |
| | | DE 19753546 A1 | 10-06-1999 |
| | | EP 1035794 A1 | 20-09-2000 |
| | | ES 2173658 T3 | 16-10-2002 |
| | | HK 1034177 A1 | 30-09-2004 |
| | | JP 2001524338 T | 04-12-2001 |
| | | NO 20002771 A | 30-05-2000 |
| | | US 7189667 B1 | 13-03-2007 |
| DE 202008001546 U1 | 27-03-2008 | KEINE | |
| DE 102007003336 A1 | 24-07-2008 | WO 2008087026 A1 | 24-07-2008 |
| US 4605640 A | 12-08-1986 | JP 62043483 A | 25-02-1987 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2229361
- AT 204967
- DE 10104259
- DE 4127823
- DE 4417503
- DE 102006021525
- DE 19849427
- DE 19954643
- DE 20208950 U1
- DE 29705010 U1
- DE 102004024134
- EP 0649895 A